# EUROPEAN PATENT SPECIFICATION

(11) **EP 2 952 388 B1**
(45) Date of publication and mention of the grant of the patent: **28.02.2018**
(21) Application number: 14171367.7
(22) Date of filing: 05.06.2014
(51) Int. Cl.: B60R 11/04

(54) **A MOUNTING APPARATUS FOR MOUNTING AN AUTOMOTIVE SENSOR**
EINE BEFESTIGUNGSVORRICHTUNG ZUM BEFESTIGEN EINES AUTOMOBIL-SENSOR
APPAREIL DE MONTAGE POUR LE MONTAGE D'UN CAPTEUR AUTOMOBILE

(43) Date of publication of application: 09.12.2015
(73) Proprietor: Continental Automotive GmbH, 30165 Hannover (DE)
(72) Inventor: Christescu, Radu, 305100 Timis (RO); Petrascu, Mihai, 300554 Timisoara (RO); Vuletici, Goran, 327367 Campia, Jud. Caras-Severin (RO); Dragan, Cristina, Timisoara 300145 (RO)
(74) Representative: Büchner, Jörg

(56) References cited:
- EP-A1- 2 722 234
- WO-A1-01/70539
- DE-U1- 20 217 060
- DE-U1-202009 010 193
- US-A1- 2003 210 328

## Description

The invention relates to a mounting apparatus for mounting an automotive sensor device on a vehicle and in particular to a mounting apparatus for mounting an automotive sensor device of a driver assistance system of a vehicle.

Most vehicles comprise a driver assistance system which supports the driver of the vehicle when performing driving manoeuvres such as parking. Driver assistance systems can provide a plurality of driver assistance functions to the driver. A driver assistance system can comprise a plurality of different sensors generating sensor data processed by a processing unit of the driver assistance system to provide the driver assistance functions for the driver. The sensor devices of the driver assistance system can comprise different kinds of sensors such as cameras, radar sensors or infrared sensors. These kinds of sensors are able to provide a large variety of information data comprising information e. g. about falling rain drops or traffic participants such as other vehicles, obstacles or pedestrians. The collected sensor data or information is processed by a processing unit of the driver assistance system in order to warn a driver of the vehicle or to take autonomously action without any further input by the driver such as activating the brakes or steering the vehicle. The driver assistance system thereby increases the driving safety of the vehicle and the driving comfort of the driver of the vehicle.

Due to the fact that the size and shape of vehicles are different from another, also an installation area for mounting sensor devices can differ. Typical installation areas are the windshield, a bumper or the chassis of the vehicle. This leads to the necessity of producing a specific bracket for every vehicle type in order to ensure a proper position and orientation of the respective sensor devices. Developing a specific bracket for each vehicle type implies an increasing time for development of the bracket and low flexibility when the vehicle type does change or the geometry of the vehicle is altered. The use of specific brackets for each type of vehicle further translates into additional tooling and qualification tests for each specific bracket.

EP2722234 is considered to be the closest prior art and discloses a mounting apparatus for mounting an automotive sensor device on a vehicle according to the preamble of claim 1.

Accordingly, it is an object of the present invention to provide a mounting apparatus for mounting an automotive sensor device on a vehicle which can be flexibly used for a wide variety of different vehicles.
This object is achieved by a mounting apparatus for mounting an automotive sensor device on a vehicle comprising the features of claim 1.
According to a first aspect of the present invention, the invention provides a mounting apparatus (1) for mounting an automotive sensor device (2) on a vehicle comprising a fixed bracket (3) adapted to be attached to an installation area (4) of said vehicle, a rotary bracket (5) connected to said fixed bracket (3) by means of hinges (15, 16) and adapted to support said automotive sensor device (2), and an adjustment mechanism (11) adapted to adjust a pitch angle of the automotive sensor device (2) by rotating said rotary bracket (5) in said hinges (15, 16) relative to said fixed bracket (3), wherein that said adjustment mechanism (11) comprises an electromechanical adjustment mechanism, and said pitch angle of said automotive sensor device (2) is adjusted dynamically by means of an electrical actuator of said electromechanical adjustment mechanism.

An advantage of the mounting apparatus according to the first aspect of the present invention resides in that it is an adjustable mounting apparatus which allows a precise mounting of the automotive sensor device with an exact orientation and mounting position. A further advantage is that the adjustment mechanism can be remote-controlled by use of control signals. In a possible embodiment of the mounting apparatus according to the first aspect of the present invention, the automotive sensor device comprises at least one optical sensor device taking images of the vehicle's surrounding.
In a still further possible embodiment of the mounting apparatus according to the first aspect of the present invention, the installation area of said vehicle comprises a bumper area, a chassis area and/or a window pane area of the vehicle.
In a still further possible embodiment of the mounting apparatus according to the first aspect of the present invention, the window pane area comprises a windshield with an inclination angle.
In a still further possible embodiment of the mounting apparatus according to the first aspect of the present invention, the pitch angle of the automotive sensor device is adjustable depending on an inclination angle of the installation area of said vehicle.

In a still further possible embodiment of the mounting apparatus according to the first aspect of the present invention, the electrical actuator is controlled by a control unit depending on pitch angle adjustment parameters.
In a still further possible embodiment of the mounting apparatus according to the first aspect of the present invention, the pitch angle adjustment parameters comprise a current speed of the vehicle and/or a current acceleration of the vehicle and/or a detected ambient light and/or a detected load of the vehicle.

In a still further possible embodiment of the mounting apparatus according to the first aspect of the present invention, the adjustment mechanism comprises a coil spring adapted to push the rotary bracket towards the fixed bracket and a screw surrounded by the coil spring adapted to adjust a distance between the fixed bracket and the rotary bracket.
In a still further possible embodiment of the mounting apparatus according to the first aspect of the present invention, the fixed bracket forms part of a sensor casing of the automotive sensor device.
In a still further possible embodiment of the mounting apparatus according to the first aspect of the present invention, the fixed bracket and/or the sensor casing are mounted in the installation area of the vehicle by gluing, screwing or snapping.
The invention further provides according to a second aspect a driver assistance system of a vehicle comprising the features of claim 5. In a possible embodiment of the driver assistance system according to the second aspect of the present invention, the driver assistance system further comprises a control unit connected to the automotive sensor device to receive sensor data.

In a possible embodiment of the driver assistance system according to the second aspect of the present invention, the control unit of the driver assistance system is adapted to perform an angular adjustment of a pitch angle of the automotive sensor device depending on pitch angle adjustment parameters provided by sensors of said vehicle or read from a pitch angle calibration memory connected to the control unit or received by a transceiver of the vehicle.

In a still further possible embodiment of the driver assistance system according to the second aspect of the present invention, the pitch angle adjustment parameters comprise a current speed of the vehicle, a current acceleration of the vehicle, a current load of the vehicle and/or a mounting position of the mounting apparatus and/or an inclination angle of the installation area and/or a vehicle type indicating an inclination angle of the installation area of the vehicle.

In the following, possible embodiments of the mounting apparatus and the driver assistance system according to the different aspects of the present invention are described with reference to the enclosed figures in more detail.
- Fig. 1: shows an isometric view of a possible embodiment of a mounting apparatus according to the first aspect of the present invention;
- Fig. 2: shows a section view of the mounting apparatus illustrated in Fig. 1;
- Fig. 3: shows an exploded view of the exemplary embodiment of the mounting apparatus illustrated in Figs. 1, 2;
- Figs. 4A, 4B: show side views for illustrating possible angle range limits of the exemplary embodiment illustrated in Figs. 1 to 3;
- Figs. 5A, 5B: illustrate exemplary conventional housing types of automotive sensor devices for illustrating an advantage provided by the mounting apparatus according to the present invention;
- Figs. 6A, 6B,: show different views of a further exemplary
- 6C, 6D: embodiment of a mounting apparatus according to the present invention;
- Figs. 7A, 7B,: show an exemplary optical module with a
- 7C: mounting apparatus according to a possible embodiment of the present invention;
- Figs. 8A, 8B,: show section views through the exemplary
- 8C: embodiment illustrated in Figs. 7A, 7B, 7C.

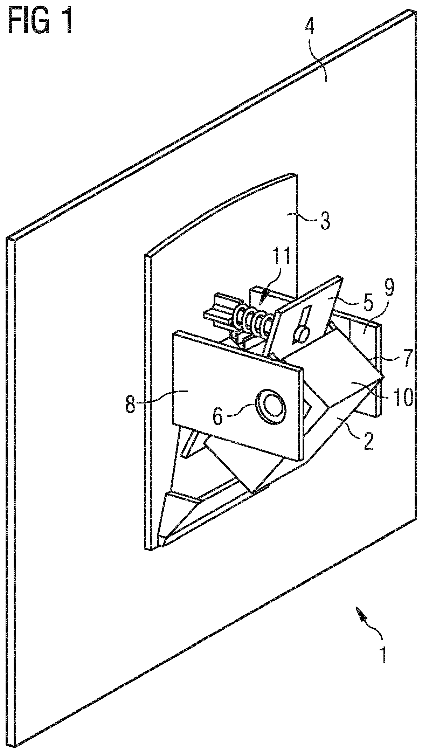

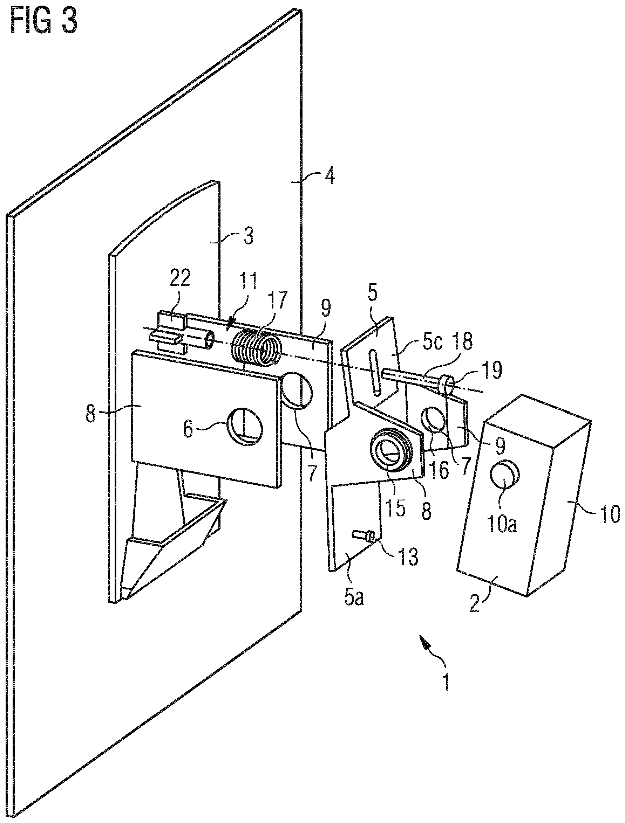

The invention provides according to a first aspect a mounting apparatus 1 for mounting an automotive sensor device on a vehicle such as a car or a truck. Fig. 1 shows an exemplary embodiment of a mounting apparatus 1 for an automotive sensor device 2 on a vehicle. The mounting apparatus 1 comprises a fixed interface bracket 3 attached to an installation area 4 of the vehicle. The installation area 4 can be in a possible embodiment a window pane area of a window of the vehicle. In a specific embodiment, the installation area 4 is formed by a windshield of the vehicle. In this embodiment, the installation area 4 is transparent so that the sensor devices 2 behind the installation area 4 can receive optical signals and/or ambient light. In an alternative embodiment, the installation area 4 can also comprise a bumper area at a bumper of the vehicle. Moreover, the installation area 4 can comprise a chassis area of a chassis of the vehicle. The mounting apparatus 1 as illustrated in Fig. 1 comprises a rotary bracket 5 connected to the fixed interface bracket 3 by means of hinges carried by arms 8, 9 of the fixed interface bracket 3. In the exemplary embodiment shown in Fig. 1, the arms 8, 9 form an integral part of the fixed bracket 3 and support the casing of the automotive sensor device 2 by means of the hinges snapped into receiving holes 6, 7 of the supporting arms 8, 9. In the shown exemplary embodiment of Fig. 1, the automotive sensor device 2 comprises a casing 10 having on both sides protrusions 10a, 10b as illustrated in Fig. 3. The mounting apparatus 1 as illustrated in Fig. 1 comprises an adjustment mechanism 11 adapted to adjust a pitch angle of the automotive sensor device 2. The adjustment mechanism 11 is adapted to perform an angular adjustment of the pitch angle by rotating the rotary bracket 5 in the hinges relative to the fixed bracket 3. In a possible embodiment, the automotive sensor device 2 can comprise at least one optical sensor device taking images of the vehicle's surrounding through the transparent window pane 4. The window installation area to which the fixed bracket 3 is attached can be formed by a window pane area of a windshield having a specific inclination angle. For instance, a vehicle such as a truck has a relative high inclination angle, whereas a sports car only has a very small inclination angle for improving the aerodynamic characteristics of the vehicle. In a possible embodiment of the mounting apparatus 1, the pitch angle of the automotive sensor device 2 is adjustable depending on the inclination angle at the installation area of the vehicle.

The adjustment mechanism 11 of the mounting apparatus 1 is formed by an electromechanical adjustment mechanism. In the example shown in Fig. 1, which doesn't belong to the invention, the adjustment mechanism 11 is formed by a mechanical adjustment mechanism to provide mechanical adjustment of the pitch angle of the automotive sensor device 2. This example provides the advantage that it is robust and fairly simple to implement. The mounting apparatus 1 as illustrated in Fig. 1 forms a generic angular adjustable mechanical system for an automotive sensor device 2. The mounting apparatus 1 as shown in Fig. 1 can be used for a wide variety of vehicles with different installation areas and with different inclination angles of the respective installation areas. The mounting apparatus 1 ensures a large angular adjustment on different vehicles and can be easily customized according to customer specifications.

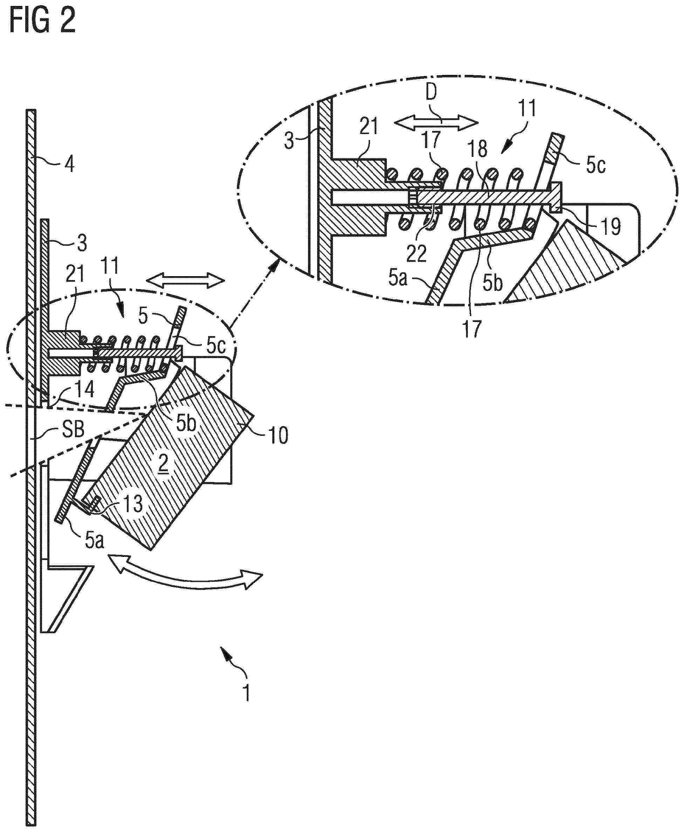

Fig. 2 shows a section view through the mounting apparatus 1 illustrated in Fig. 1. As illustrated in Fig. 2, the rotary bracket 5 connected to the fixed bracket 3 by means of the hinges 6, 7 shown in Fig. 1 is adapted to support the casing 10 of the automotive sensor device 2. In the shown exemplary embodiment, the lower surface of the casing 10 of the automotive sensor device 2 is attached to fixing means 13 of the rotary bracket 5 supporting the casing 10 of the automotive sensor device 2 as also illustrated in Fig. 3. In the shown exemplary embodiment, the rotary bracket 5 comprises three sections, i.e. a relatively long first section 5a, comprising the fixing means 13 with a relative high inclination angle, a middle section 5b with a relative small inclination angle and a third section 5c on top having a relative high inclination angle and connected to the adjustment mechanism 11 of the mounting apparatus 1. In the exemplary embodiment of Fig. 2, the automotive sensor device 2 comprises a sensor beam SB with a beam angle reaching through a hole 14 of the fixed interface bracket 3 and through the transparent window pane area. In the embodiment shown in Fig. 2, the fixed interface bracket 3 comprises holes which allow optical and/or other electromagnetical signals to pass through the exterior of the vehicle. In a further possible embodiment, the fixed interface bracket 3 is formed at least partially also by a transparent material.

The rotary bracket 5 is snapped by means of snapping hinges 15, 16 into the receiving holes 6, 7 of the fixed interface bracket 3 as also illustrated in Fig. 3. This allows an angular movement of these two parts. For controlling the angle of the rotary bracket 5, the mobile rotary bracket 5 is positioned in the shown exemplary embodiment between a coil spring 17 surrounding a screw 18 having a screw head 19 as illustrated in Fig. 2. The top portion 5c of the rotary bracket 5 comprises a vertical slot 20 as illustrated in Fig. 3 to insert the screw 18 through the rotary bracket 5. The screw 18 comprises a threaded axis and a thread to screw it into a base portion 21 of the fixed bracket 3 through an adjustment nut 22 as illustrated in Fig. 2. Accordingly, in the embodiment shown in Figs. 1 to 4, the adjustment mechanism 11 comprises a coil spring 17 adapted to push the rotary bracket 5 towards the fixed bracket 3 and a screw 18 surrounded by the coil spring 17 adapted to adjust the distance D between the fixed bracket 3 and the rotary bracket 5. In a possible embodiment, the fixed bracket 3 is glued to the installation area of the vehicle. The spring coil 17 has the task to push the mobile bracket 5 towards the interface bracket 3 and the screw 18 helps to adjust a relative position between these two parts by rotating the screw 18 on a threaded axis located on the interface bracket 3. To provide the threaded axis it can be used a press nut, an overmolded nut or a thread created directly in the interface bracket using a self-threading screw.

The entire generic angular adjustable mounting apparatus 1 as illustrated in Figs. 1 to 4 is mounted on the vehicle through the interface bracket 3. Several different mounting methods can be used to attach the interface bracket 3 to the vehicle. In a possible embodiment, the interface bracket 3 is glued to the installation area of the vehicle. In a further possible embodiment, the interface bracket 3 can also be welded to the installation area of the vehicle. In a still further possible embodiment, the interface bracket 3 can also be screwed to the vehicle chassis of the vehicle or to any other installation area of the vehicle. The mounting apparatus 1 as illustrated in the embodiment of Figs. 1 to 4 can be installed on various vehicle areas such as a windshield, bumper, chassis area, the vehicle body and other areas depending on the sensor usage, either horizontal or vertical. Moreover, the mounting apparatus 1 as illustrated in Figs. 1 to 4 ensures a stable position for the sensor devices 2 against vibrations caused by the vehicle. The sensor device 2 can be snapped and an angular calibration can be performed by using the generic angular adjustable mounting apparatus 1 before or after it is installed on the vehicle. The angular calibration after installation of the mounting apparatus 1 on the vehicle can be used to correct angular deviations generated by an installation area being outside the predetermined specification. Accordingly, the mounting apparatus 1 according to the present invention provides tolerance against production deviations of the installation area such as the windshield. In the mounting apparatus 1, the pitch angle of the automotive sensor device 2 is adjusted dynamically by means of a mechanical or electrical actuator of the electromechanical adjustment mechanism 11. In a possible embodiment, the electrical actuator can be controlled by a control unit of the vehicle depending on pitch angle adjustment parameters. These pitch angle adjustment parameters can comprise in a possible embodiment a current speed of the vehicle and/or a current acceleration of the vehicle and/or a detected ambient light of the vehicle's surrounding and/or a detected load of the vehicle. These pitch angle adjustment parameters can be provided by further sensors of the vehicle or read in a possible embodiment from a pitch angle calibration memory connected to the control unit. Further, the pitch angle calibration memory can also be connected to a transceiver of the vehicle receiving the pitch angle adjustment parameters via a wireless link from the base station connected via a data network to a database. The data stored in the database can be provided by the manufacturer of the vehicles or of relevant components of the vehicle. The control unit can be adapted to read out the provided adjustment parameters and perform an angular adjustment of a pitch angle of the automotive sensor device 2 depending on the received pitch angle adjustment parameters. The received or stored pitch angle adjustment parameters can comprise a current velocity of the vehicle at least in one direction. Further, the pitch angle adjustment parameters can comprise a positive or negative current acceleration of the vehicle measured by sensors of the vehicle. Moreover, the pitch angle adjustment parameters can comprise a current load or weight of the vehicle also measured by sensors of the vehicle. In a still further possible embodiment, the pitch angle adjustment parameters can also comprise a mounting position of the mounting apparatus 1 and/or an inclination angle of the respective installation area such as installation area 4 shown in Fig. 1. In a still further possible embodiment, the pitch angle adjustment parameters can also comprise a vehicle type indicating an inclination angle of a specific installation area of the vehicle. For instance, the vehicle type can indicate that the vehicle is a sports car where the windshield of the sports car has a specific small inclination angle. The vehicle type can also be identified by a vehicle type identification number. In a possible embodiment, the database comprises a table identifying for each inclination angle corresponding pitch angle adjustment parameters including a desired pitch angle for the respective automotive sensor device 2. Accordingly, after having attached the mounting apparatus 1 to a predetermined installation area 4 of the vehicle, a request can be sent by the control unit connected to the electromechanical adjusting mechanism of the adjustment mechanism 11 to receive suited pitch angle adjustment parameters. As soon as the control unit has received a set of pitch angle adjustment parameters, it can perform an automotive calibration of the mounted sensor device 2 depending on the received pitch angle adjustment parameters and depending on the specific type of the respective vehicle. In this embodiment, the calibration of the automotive sensor device 2 is performed after installation to provide a very accurate positioning and orientation of the supported sensor device 2 such as a camera of the vehicle.

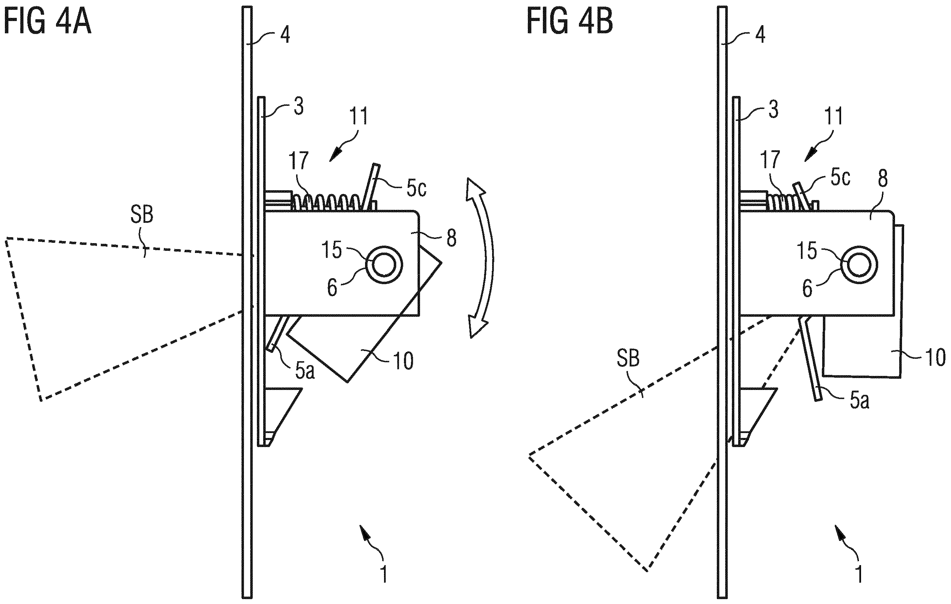

In a still further possible embodiment, the calibration of the mounting apparatus 1 to get optimal sensor data can be performed on the fly during driving of vehicle and/or during a driving manoeuvre based on current pitch angle adjustment parameters received from other sensors of the vehicle. In a possible embodiment, a pitch angle adjustment is performed by the control unit depending on a measured current acceleration of the vehicle, a measured current load of the vehicle and/or a mounting position of the mounting apparatus 1 and/or an inclination angle of the installation area 4 and/or a vehicle type indicating the inclination angle of the installation area of the vehicle. In a preferred embodiment, calibration is performed continuously by the control unit in real time. The advantage of this embodiment is that independent of the actual driving situation the automotive sensor device 2 is always optimal oriented and provides optimal and reliable sensor data which can be used by the driver assistance system for providing reliable driver assistance functions. In a possible embodiment, the automotive sensor device 2 can be adjusted within a predetermined angular range as illustrated in Figs. 4A, 4B. Fig. 4A shows the upper limit of the angular range, where the spring coil 17 is expanded and Fig. 4B shows the lower angular range limit, where the spring 17 of the mechanical mechanism 11 is compressed.

With the mechanical adjustment mechanism 11 as illustrated in Fig. 4 consisting of a spring, a screw and snapping hinges it is very easy to obtain an angular adjustment which can be customized according to the requirements of different vehicles and/or vehicle types. In this way, it is not necessary to use a specific bracket for each vehicle. This saves significantly development and production time.

The driver assistance system can provide functions like lane departure warning, traffic sign recognition using sensor data generated by sensor devices mounted on installation areas of the vehicle. For instance, a sensor device can be mounted always to look forward on a road while it is mounted on vehicles with a wide variety of windshield inclinations.

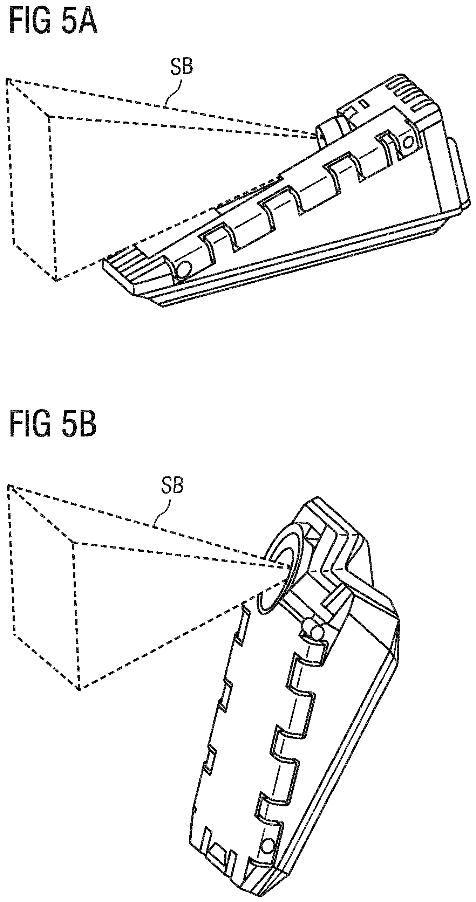

Figs. 5A, 5B show conventional housing types which are used to accommodate a wide variety of windshield inclinations. For instance, Fig. 5A shows a typical casing of an automotive sensor device 2 such as a camera for a passenger car with a relative small inclination angle. In contrast, Fig. 5B shows a typical casing of a sensor device 2 for a truck camera used in a truck having a windshield with a high inclination angle.

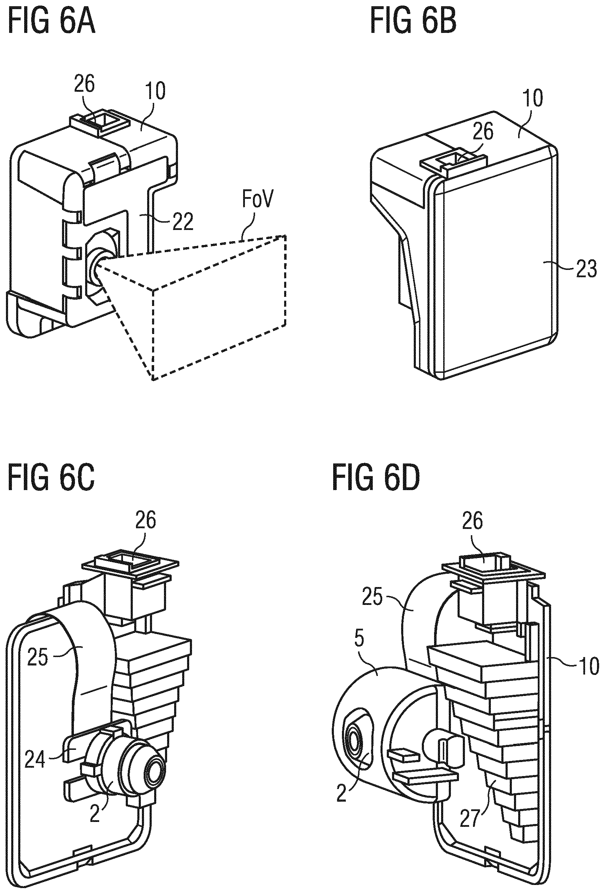

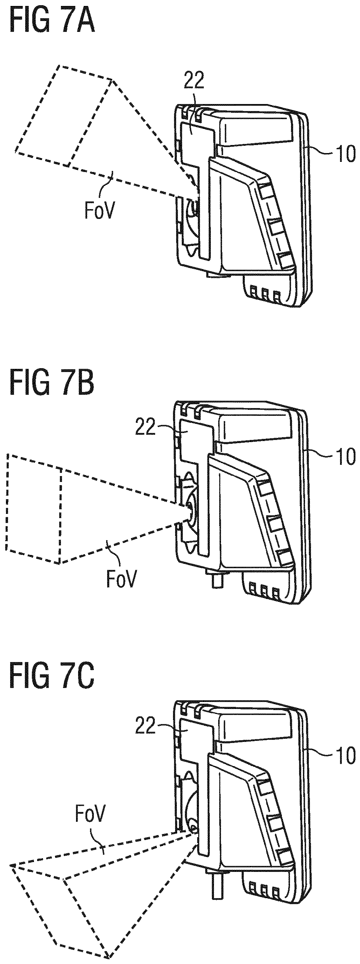

Figs. 6A, 6B, 6C, 6D show a further exemplary embodiment of a mounting apparatus 1 for mounting an automotive sensor device 2 on a vehicle. In the shown exemplary embodiment, the fixed bracket 3 of the mounting apparatus 1 forms part of a sensor casing 10 of the automotive sensor device 2. In the exemplary embodiment of Fig. 6A to 6D, the sensor device 2 is an optical module being mounted such that it is rotary by means of a mounting apparatus 1 according to the present invention. Fig. 6A shows a casing 10 of a camera of a driver assistance system of a vehicle which can be attached to an installation area of the vehicle by means of an adhesive tape 22. Fig. 6A further illustrates a field of view FOV of an optical module 2 within the housing 10. In a possible embodiment, the camera illustrated in Fig. 6A can be directly glued to a windshield of the vehicle. The optical module 2 is mounted inside a rotary bracket. In this way, the optical module 2 can be rotated to adjust a pitch angle in order that the field of view FOV does have a required angle to ground no matter which inclination angle the inclination area 4 of the windshield does comprise. Fig. 6B shows the casing or housing 10 of the camera covered by a sheet metal cover 23 for protection before mounting. Fig. 6C shows a partial section view with insight the housing 10 illustrating an optical module as an automotive sensor device 2 comprising an optical module printed circuit board PCB 24 attached to a flexible data cable 25. Fig. 6D shows also a partially section view through a housing 10 of the camera illustrating the optical module 2 supported by a rotary bracket 5 connected to a fixed bracket 3 by means of hinges being adapted to support the automotive sensor device 2. Fig. 6D shows a connector 26, in particular an electrical connector, provided for connecting the automotive sensor device 2 to further components of the automotive driver assistance system, in particular to a control unit of said system. In a possible embodiment, the automotive sensor device 2 formed by an optical module is connected via the flexible cable 25 to the electrical connector 26 of the camera. The electrical connector 26 is provided within the housing 10 of the camera as illustrated in Fig. 6D. The camera can further comprise a PCB component zone 27 for components adapted to provide image data processing as illustrated in Fig. 6D. The rotary bracket 5 holding the automotive sensor device 2 can be rotated to change the field of view FOV of the automotive sensor device 2 as illustrated in Figs. 7A, 7B, 7C. To provide the adjustment of the optical module 2, the rotary bracket 5 can be fixed to the fixed bracket and the fixed bracket can form part of the housing 10 of the camera as illustrated in Figs. 7A, 7B, 7C. The rotary bracket 5 is fixed to the housing 10 by hinge joints which can be loaded by a torsion spring and can be actuated by a screw. As illustrated in Figs. 7A, 7B, 7C, the pitch angle can be adjusted by means of the mounting apparatus 1 according to the present invention so that the field of view FOV does have a required angle to ground independent of the inclination area of the inclination area. The calibration of the field of view FOV can be performed in a possible embodiment after installation of the sensor device. In a still further possible embodiment, the calibration and adjustment of the field of view FOV can be performed also on the fly during driving the vehicle to provide optimal sensor data used by the driving assistance system.

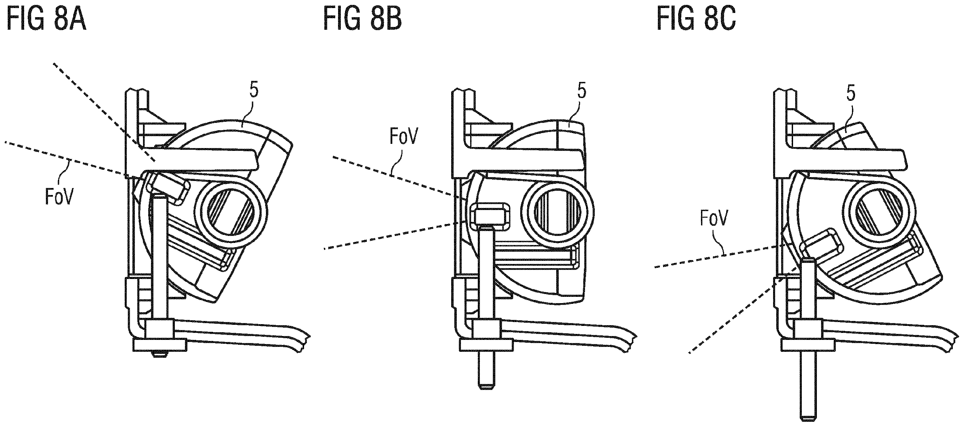

Figs. 8A, 8B, 8C show sectional views through the figures illustrated in Figs. 7A, 7B, 7C. Fig. 8A shows a high limit position of the optical sensor device 2 having a field of view FOV pointing up. Fig. 8B shows a middle position of the adjusted pitch angle and Fig. 8C shows a low limit position of the adjusted pitch angle having a field of view FOV of the optical sensor device 2 pointing down for instance to a road surface of a road in front of the vehicle. The ADAS camera illustrated in Figs. 6, 7, 8 has the ability to be mounted on a vehicle at almost any possible inclination angle of a vehicle. The adjustment of the pitch angle of the optical module 2 can be done by means of an electrical actuator. The automatic calibration of the pitch angle has the advantage that it does compensate for different load situations of the vehicle. It is further possible to dynamically adjust the pitch angle according to speed, ambient light, brake information data etc. to increase the performance of the ADAS functions of the ADAS camera and/or the ADAS driver system.

## Claims

1. A mounting apparatus (1) for mounting an automotive sensor device (2) on a vehicle comprising
a fixed bracket (3) adapted to be attached to an installation area (4) of said vehicle,
a rotary bracket (5) connected to said fixed bracket (3) by means of hinges (15, 16) and adapted to support said automotive sensor device (2), and
an adjustment mechanism (11) adapted to adjust a pitch angle of the automotive sensor device (2) by rotating said rotary bracket (5) in said hinges (15, 16) relative to said fixed bracket (3),
**characterized in that** said adjustment mechanism (11) comprises an electromechanical adjustment mechanism, and said pitch angle of said automotive sensor device (2) is adjusted dynamically by means of an electrical actuator of said electromechanical adjustment mechanism.

2. The mounting apparatus (1) according to claim 1,
wherein said mounting apparatus (1) is adapted for mounting at least one optical sensor device taking images of the vehicle's surrounding.

3. The mounting apparatus according to claim 1 or 2,
wherein the electrical actuator is controlled by a control unit depending on pitch angle adjustment parameters (PAAP), comprising a current speed of the vehicle and/or a current acceleration of the vehicle and/or a detected ambient light and/or a detected load of the vehicle.

4. The mounting apparatus according to any of the preceding claims,
wherein the adjustment mechanism (11) comprises a coil spring (17) adapted to push said rotary bracket (5) towards the fixed bracket (3) and a screw (18) surrounded by said coil spring (17) adapted to adjust a distance (D) between the fixed bracket (3) and the rotary bracket (5).

5. A driver assistance system of a vehicle comprising at least one automotive sensor device (2) mounted on the vehicle by a mounting apparatus (1) according to one of the preceding claims 1 to 4.

6. The driver assistance system according to claim 5, further comprising a control unit connected to the automotive sensor device (2) to receive sensor data,
wherein said control unit is adapted to perform an angular adjustment of a pitch angle of said automotive sensor device (2) depending on pitch angle adjustment parameters (PAAP), provided by other sensors of said vehicle and/or read from a pitch angle calibration memory connected to said control unit and/or received by a transceiver of said vehicle.

7. The driver assistance system according to claim 6,
wherein said pitch angle adjustment parameters (PAAP), comprise a current speed of the vehicle,
a current acceleration of the vehicle, a current load of the vehicle and/or a mounting position of the mounting apparatus and/or an inclination angle of the installation area and/or a vehicle type indicating an inclination angle of the installation area of the vehicle.

## Patentansprüche

1. Eine Befestigungsvorrichtung zum Befestigen eines Automobil-Sensor (2) an einem Fahrzeug, umfassend
eine feste Halterung (3), die dazu angepasst ist, an einem Installationsbereich (4) des Fahrzeugs befestigt zu sein,
eine drehbare Halterung (5), die mit Hilfe von Scharnieren (15, 16) mit der festen Halterung (3) verbunden und dazu angepasst ist, die Kraftfahrzeugsensorvorrichtung (2) zu tragen, und
einen Anpassungsmechanismus (11), der dazu angepasst ist, einen Neigungswinkel der Kraftfahrzeugsensorvorrichtung (2) durch Drehen der drehbaren Halterung (5) in den Scharnieren (15, 16) in Bezug auf die feste Halterung (3) anzupassen,
**dadurch gekennzeichnet, dass** der Anpassungsmechanismus (11) einen elektromechanischen Anpassungsmechanismus umfasst und der Neigungswinkel der Kraftfahrzeugsensorvorrichtung (2) mit Hilfe eines elektrischen Aktuators des elektromechanischen Anpassungsmechanismus dynamisch angepasst wird.

2. Befestigungsvorrichtung (1) nach Anspruch 1,
wobei die Befestigungsvorrichtung (1) zum Befestigen zumindest einer optischen Sensorvorrichtung, die Bilder der Fahrzeugumgebung aufnimmt, angepasst ist.

3. Befestigungsvorrichtung nach Anspruch 1 oder 2,
wobei der elektrische Aktuator durch eine Steuerungseinheit in Abhängigkeit von Neigungswinkeleinstellparametern (Pitch Angle Adjustment Parameters bzw. PAAP), die eine aktuelle Geschwindigkeit des Fahrzeugs und/oder eine aktuelle Beschleunigung des Fahrzeugs und/oder ein erfasstes Umgebungslicht und/oder eine erfasste Beladung des Fahrzeugs umfassen, gesteuert wird.

4. Befestigungsvorrichtung nach einem der vorangehenden Ansprüche,
wobei der Anpassungsmechanismus (11) eine Spiralfeder (17), die dazu angepasst ist, die drehbare Halterung (5) zur festen Halterung (3) zu drücken, und eine von der Spiralfeder (17) umgebene Schraube (18), die dazu angepasst ist, einen Abstand (D) zwischen der festen Halterung (3) und der drehbaren Halterung (5) einzustellen, umfasst.

5. Fahrerassistenzsystem eines Fahrzeugs, umfassend zumindest eine durch eine Befestigungsvorrichtung (1) nach einem der vorangehenden Ansprüche 1 bis 4 am Fahrzeug montierte Kraftfahrzeugsensorvorrichtung (2).

6. Fahrerassistenzsystem nach Anspruch 5, ferner umfassend eine mit der Kraftfahrzeugsensorvorrichtung (2) verbundene Steuerungseinheit zum Empfangen von Sensordaten,
wobei die Steuerungseinheit dazu angepasst ist, eine Winkeleinstellung eines Neigungswinkels der Kraftfahrzeugsensorvorrichtung (2) in Abhängigkeit von Neigungswinkeleinstellparametern (PAAP), die durch andere Sensoren des Fahrzeugs bereitgestellt und/oder aus einem mit der Steuerungseinheit verbundenen und/oder von einem Transceiver des Fahrzeugs empfangenen Neigungswinkelkalibrierungsspeicher gelesen werden, auszuführen.

7. Fahrerassistenzsystem nach Anspruch 6,
wobei die Neigungswinkeleinstellparameter (PAAP) eine aktuelle Geschwindigkeit des Fahrzeugs, eine aktuelle Beschleunigung des Fahrzeugs, eine aktuelle Beladung des Fahrzeugs und/oder eine Befestigungsposition der Befestigungsvorrichtung und/oder einen Neigungswinkel des Installationsbereichs und/oder einen Fahrzeugtyp, der einen Neigungswinkel des Installationsbereichs des Fahrzeugs anzeigt, umfassen.

## Revendications

1. Appareil de montage (1) pour monter un dispositif de capteur automobile (2) sur un véhicule comprenant
un support fixe (3) adapté pour être attaché à une zone d'installation (4) dudit véhicule, un support rotatif (5) connecté au susdit support fixe (3) au moyen de charnières (15, 16) et adapté pour supporter ledit dispositif de capteur automobile (2), et
un mécanisme d'ajustement (11) adapté pour ajuster un angle de tangage du dispositif de capteur automobile (2) en faisant pivoter ledit support rotatif (5) sur lesdites charnières (15, 16) relativement au susdit support fixe (3),
**caractérisé en ce que** ledit mécanisme d'ajustement (11) comprend un mécanisme d'ajustement électromécanique, et **en ce que** ledit angle de tangage dudit dispositif de capteur automobile (2) est ajusté de façon dynamique au moyen d'un actionneur électrique dudit mécanisme d'ajustement électromécanique.

2. Appareil de montage (1) selon la revendication 1,
ledit appareil de montage (1) étant adapté pour monter au moins un dispositif de capteur optique prenant des images des environs du véhicule.

3. Appareil de montage selon la revendication 1 ou 2,
l'actionneur électrique étant contrôlé par une unité de contrôle en fonction de paramètres d'ajustement d'angle de tangage (PAAP), comprenant une vitesse actuelle du véhicule et/ou une accélération actuelle du véhicule et/ou une lumière ambiante détectée et/ou une charge détectée du véhicule.

4. Appareil de montage selon l'une quelconque des revendications précédentes,
le mécanisme d'ajustement (11) comprenant un ressort hélicoïdal (17), adapté pour pousser ledit support rotatif (5) vers le support fixe (3) et une vis (18) entourée par ledit ressort hélicoïdal (17) adaptée pour ajuster une distance (D) entre le support fixe (3) et le support rotatif (5).

5. Système d'aide à la conduite d'un véhicule comprenant au moins un dispositif de capteur automobile (2) monté sur le véhicule par un appareil de montage (1) selon l'une des revendications précédentes 1 à 4.

6. Système d'aide à la conduite selon la revendication 5, comprenant en outre une unité de contrôle connectée au dispositif de capteur automobile (2) pour recevoir des données de capteur,
ladite unité de contrôle étant adaptée pour exécuter un ajustement angulaire d'un angle de tangage dudit dispositif de capteur automobile (2) en fonction de paramètres d'ajustement d'angle de tangage (PAAP), fournis par d'autres capteurs dudit véhicule et/ou lus par une mémoire de calibrage d'angle de tangage connectée à ladite unité de contrôle et/ou reçus par un émetteur-récepteur dudit véhicule.

7. Système d'aide à la conduite selon la revendication 6,
les paramètres d'ajustement d'angle de tangage (PAAP) comprenant une vitesse actuelle du véhicule, une accélération actuelle du véhicule, une charge actuelle du véhicule et/ou une position de montage de l'appareil de montage et/ou un angle d'inclinaison de la zone d'installation et/ou un type de véhicule indiquant un angle d'inclinaison de la zone d'installation du véhicule.
